(19) Europäisches Patentamt
European Patent Office
Office européen des brevets

(11) **EP 2 107 677 B1**

(12) **EUROPÄISCHE PATENTSCHRIFT**

(45) Veröffentlichungstag und Bekanntmachung des Hinweises auf die Patenterteilung:
**21.12.2016 Patentblatt 2016/51**

(51) Int Cl.:
*H02P 29/024* *(2016.01)*    *H02P 27/08* *(2006.01)*
*H02P 1/04* *(2006.01)*    *F04D 27/00* *(2006.01)*

(21) Anmeldenummer: **09001582.7**

(22) Anmeldetag: **05.02.2009**

(54) **Elektronisch kommutierter Elektromotor**

Electronically commutated electric motor

Moteur électrique commuté électroniquement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.04.2008 DE 102008018447**

(43) Veröffentlichungstag der Anmeldung:
**07.10.2009 Patentblatt 2009/41**

(73) Patentinhaber: **Ebm-Papst St. Georgen GmbH & CO. KG**
**78112 St. Georgen (DE)**

(72) Erfinder:
• **Haas, Benjamin**
**78112 St. Georgen (DE)**
• **Heller, Frank**
**78126 Königsfeld-Burgberg (DE)**

(74) Vertreter: **Raible Deissler Lehmann Patentanwälte PartG mbB**
**Senefelderstrasse 26**
**70176 Stuttgart (DE)**

(56) Entgegenhaltungen:
DE-A1- 19 817 891    DE-A1-102005 024 068
JP-A- H0 965 675

**Beschreibung**

Die Erfindung betrifft einen elektronisch kommutierten Elektromotor. Diese Motoren haben gewöhnlich einen permanentmagnetisch erregten Rotor und einen Stator mit einer Statorwicklung, der im Betrieb Antriebsenergie zugeführt wird. Der Rotor kann auch fremderregt sein.

Ein solcher Motor kann je nach Auslegung eine geeignete Phasenzahl N haben, z.B. N = 1, 3, >3, und er kann eine geeignete Zahl von Strängen haben, z.B. ein einphasiger Motor mit einem oder zwei Strängen, ein dreiphasiger Motor mit drei oder sechs Strängen, etc. Zur Erfassung der Rotorstellung kann der Motor einen oder mehrere Rotorstellungssensoren haben, oder er kann - teilweise oder ganz - nach dem sogenannten Sensorless-Prinzip arbeiten.

Ist ein solcher Motor für Betrieb in einem großen Spannungsbereich ausgelegt, z.B. von 20 bis 80 V, was man auch als "Weitspannungsmotor" bezeichnet, so ist es nicht mehr möglich, die Wicklung so auszulegen, dass bei der Betriebsdrehzahl die in der Statorwicklung vom Rotor induzierte Spannung etwa der Betriebsspannung des Motors entspricht. Diese konventionelle Auslegung bewirkt nämlich eine dem Motor inhärente Strombegrenzung, doch setzt sie neben einer etwa konstanten Drehzahl auch eine etwa konstante Betriebsspannung voraus, die bei einem Weitspannungsmotor nicht gegeben sein kann. Deshalb liegt bei einem solchen Motor die induzierte Spannung häufig weit unterhalb der Betriebsspannung, was man im Fachjargon als "scharfe Wicklung" bezeichnet, d.h. eine solche Wicklung hat eine niedrige Zahl von Windungen aus dicken Drähten, und deshalb muss eine elektronische Strombegrenzung vorgesehen werden, um den Motorstrom zu begrenzen, der in dieser "scharfen Wicklung" fließt. Dies gilt besonders für den Start, wo die induzierte Spannung den Wert Null hat und folglich eine niederohmige Wicklungsanordnung ganz schnell zu hohen Motorströmen führen kann, wenn diese nicht in geeigneter Weise begrenzt werden, also vor allem sehr rasch. Dasselbe gilt für einen solchen Motor, der bei einer hohen Betriebsspannung läuft und blockiert wird.

Die DE 10 2005 024 068 A1 zeigt einen Elektromotor, welcher aus einem Gleichspannungsnetz gespeist ist, eine Steuereinheit in Form eines Mikrocontrollers, welcher ein Stellglied mit einem Ansteuersignal einer PWM-Steuerung ansteuert. Die Netzgleichspannung wird von der Steuereinheit abgegriffen und in einem A/D-Wandler in ein digitales Signal umgewandelt. Bei einem Startsignal erscheint am Ausgang der Steuereinheit für eine erste kurze Zeitspanne 0-t1 eine fest vorgegebenen Startspannung für den Anlauf des Motors, wobei die Höhe der Startspannung und der folgenden Steuerspannungen für das Stellglied durch das Tastverhältnis von der PWM-Steuerung bestimmt werden. Nach dem Ende der ersten kurzen Zeitspanne 0-t1 mit konstanter Spannungsversorgung des Motors wird das Tastverhältnis vorzugsweise linear erhöht, und eine vorgegebene Höhe der Versorgungsspannung UB des Motors wird erreicht. Anschließend wird in einem dritten Zeitabschnitt t2-t3 das Tastverhältnis der Steuerspannung für das Stellglied weiter erhöht, bis eine Betriebsspannung U3 für den Dauerbetrieb des Motors erreicht wird.

Es ist deshalb eine Aufgabe der Erfindung, einen neuen elektronisch kommutierten Motor bereit zu stellen.

Diese Aufgabe wird gelöst durch den Gegenstand des Patentanspruchs 1.

Die DE 10 2005 024 068 A1 offenbart folgende Merkmale des Patentanspruchs 1:

Ein Elektromotor, welcher aufweist: einen Rotor; einen Stator, welcher letzterem eine Statorwicklungsanordnung zugeordnet ist, der im Betrieb aus einer externen Energiequelle elektrischer Strom für den Antrieb des Motors zuführbar ist; einen digitalen Rechner, welcher zur Steuerung des regulären Starts des Motors ausgebildet ist; einen dem digitalen Rechner zugeordneten PWM-Generator; wobei der Motor für den Betrieb in einem Parameterbereich ausgelegt ist, welcher variable Parameter umfasst, die beim Start des Motors unterschiedliche Werte haben können, und der digitale Rechner zur Ausführung folgender Schritte ausgebildet ist: nach dem Einschalten des Motors und vor dem Beginn des regulären Starts wird während einer ersten Phase der der Statorwicklungsanordnung aus der externen Energiequelle zugeführte Strom mit einem Tastverhältnis aus- und eingeschaltet, um einen Start des Motors zu bewirken; anschließend an die erste Phase wird, wenn sich der Rotor dreht, der reguläre Start des Motors eingeleitet.

Wenn der Motor für Betrieb in einem weiten Spannungsbereich bestimmt ist, z.B. für 20 V bis 80 V, so muss er so ausgelegt werden, dass er bei einer hohen Betriebsspannung, also z.B. 80 V, keinen zu hohen Anlaufstrom erhält, und umgekehrt muss er so ausgelegt werden, dass er auch bei einer niedrigen Betriebsspannung, also z.B. 20 V, ausreichend schnell und sicher starten kann.

Deshalb wird nach dem Einschalten des Stroms in einem solchen Motor die augenblickliche Größe mindestens eines variablen Parameter ermittelt, der beim Start zu berücksichtigen ist, also z.B. die augenblickliche Größe der Betriebsspannung. Dieser Parameter wird mittels eines A/D-Wandlers digitalisiert, so dass man einen digitalen Wert für ihn erhält. Bei einem A/D-Wandler mit 8 Bit wird dieser Wert im Bereich 0 bis 255 Digits liegen, wobei die Zuordnung zwischen der analogen Betriebsspannung und dem digitalen Wert in geeigneter Weise gewählt werden kann, also ggf. auch nichtlinear. Ausgehend von diesem digitalen Wert wird nach vorgegebenen Regeln ein PWM-Wert für die Steuerung des Motorstroms ermittelt, und mit diesem PWM-Wert wird der Motorstrom während einer vorgegebenen ersten Zeitspanne nach dem Start in Bereichen gesteuert, welche außerhalb der Kommutierungsvorgänge liegen. Auf diese Weise kann man bei hohen Betriebsspannungen den Motorstrom beim Starten oder bei blockiertem Motor unterhalb eines vorgegebenen Maximalwerts halten, und man kann umgekehrt bei niedrigen Betriebsspannungen den Motorstrom dadurch "anheben", dass man dort einen hohen PWM-Wert verwendet.

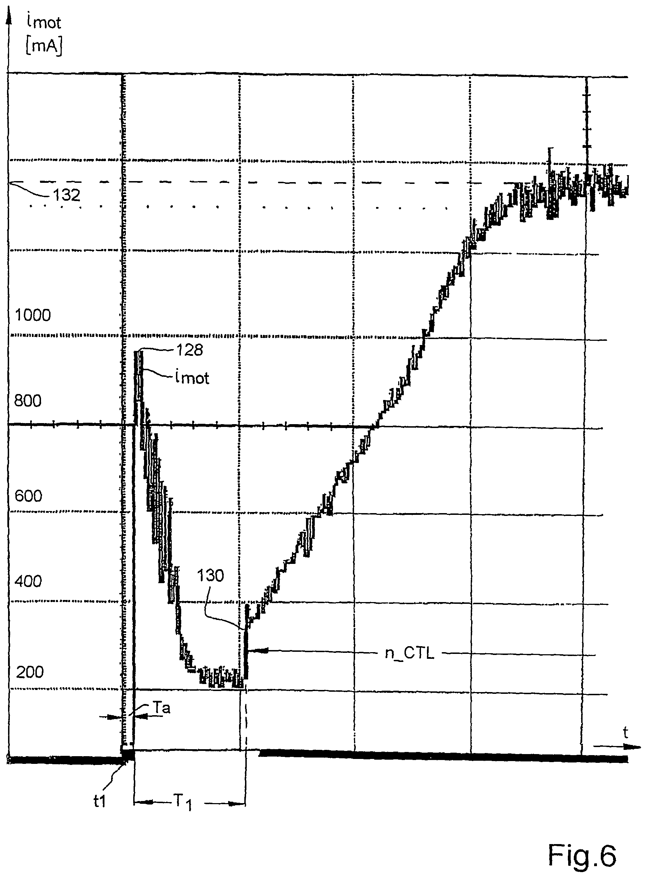

Auch kann vom Kunden die Forderung vorliegen, dass der Anlaufstrom nur so hoch sein darf, dass die vom Kunden vorgesehene Stromquelle, z.B. die Amtsbatterie eines Telefonamts, nicht überlastet werden kann. Auch diese Forderung kann bei der Erfindung erfüllt werden, indem man die vorgegebenen Regeln für die Ermittlung des PWM-Werts so modifiziert, dass während der Startphase ein Strom fließt, der z.B. niedriger ist als der Betriebsstrom (running current), den der Motor bei voller Drehzahl benötigt. Ein Beispiel hierfür ist in Fig. 6 dargestellt.

Bei Betrieb in der Arktis oder Antarktis haben Motoren mit Kugellagern das Problem, dass das Schmierfett so hart wird, dass ein Start des kalten Motors oft nur mit einem stark erhöhten Startstrom möglich ist, und diese Forderung muss dann bei einem Weitspannungsmotor, der für solche Temperaturextreme bestimmt ist, innerhalb des gesamten zulässigen Spannungsbereichs erfüllt sein, um bei allen variablen Betriebsparametern (variable Betriebsspannung, variable Temperatur, etc.) einen sicheren Start zu gewährleisten.

Nachfolgend wird ein solcher Motor als Ausführungsbeispiel beschrieben, der permanentmagnetisch erregt ist und der mittels einer sogenannten H-Brücke kommutiert wird. Solche einphasigen, einsträngigen, zweipulsigen Motoren sind von ihrer Grundstruktur her bekannt, aber nicht für Betrieb mit stark variierenden Parametern, z.B. für Betrieb mit einer Betriebsspannung, die in einem großen Bereich variabel ist.

Die Begriffe zweipulsig, dreipulsig etc. beziehen sich auf die Zahl der Stromimpulse im Stator pro Drehung des Rotors um 360° el.

Dabei ist nochmals darauf hinzuweisen, dass es sich nur um Ausführungsbeispiele handelt, d.h. die Erfindung ist in keiner Weise auf diese Ausführungsbeispiele beschränkt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1     ein Schaltbild einer bevorzugten Ausführungsform,

Fig. 2     eine schematische Darstellung der Berechnung des Tastverhältnisses pwm für den Startstrom,

Fig. 3     eine schematische Darstellung, welche Möglichkeiten aufzeigt, wie man durch Variation verschiedener Werte die Umsetzung der gemessenen Betriebsspannung $U_B$ in ein angemessenes Tastverhältnis pwm für den Betrieb des Motors optimieren kann,

Fig. 4     ein erstes Flussdiagramm zur Implementierung von Fig. 3,

Fig. 5     Oszillogramme, welche bei unterschiedlichen Betriebsspannungen die Ströme zeigen, die in einem blockierten Motor fließen,

Fig. 6     ein Oszillogramm des Stromverlaufs beim Start eines solchen Motors,

Fig. 7     ein zweites Flussdiagramm zur Implementierung von Fig. 3,

Fig. 8     eine Routine zur Erhöhung des pwm-Werts bei sinkender Umgebungstemperatur, und

Fig. 9     ein drittes Flussdiagramm, das zur gleichzeitigen Implementierung einer Korrektur des pwm-Werts abhängig von der augenblicklichen Betriebsspannung $U_B$ und der augenblicklichen Umgebungstemperatur dient.

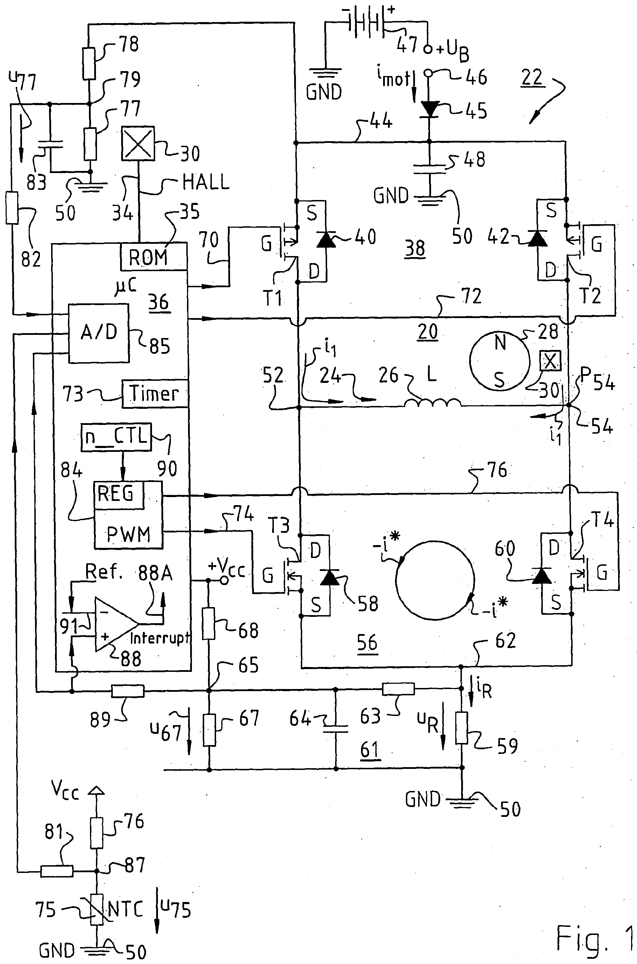

**Fig. 1** zeigt den Aufbau eines zweipulsigen, einsträngigen, elektronisch kommutierten Motors 20, dessen einziger Wicklungsstrang 26 an einer H-Brücke 22 betrieben wird, deren H-förmige Grundstruktur durch dickere Linien hervorgehoben ist, um das Verständnis zu erleichtern.

In einem Querzweig 24, den man auch als Diagonale der H-Brücke 22 bezeichnet, hat der Motor 20 in seinem Stator den Wicklungsstrang 26 mit der Induktivität L. Der Strang 26 arbeitet zusammen mit einem schematisch dargestellten, permanentmagnetischen Rotor 28, der je nach Bauart die verschiedensten Formen haben kann, z.B. Innenrotor, Außenrotor, Flachrotor etc., und der unterschiedliche Polzahlen haben kann, z.B. 2-polig (wie dargestellt), 4-, 6-, 8-polig etc.

Ein Rotorstellungssensor 30, der in Fig. 1 doppelt dargestellt ist und gewöhnlich ein Hallsensor ist, wird vom Magnetfeld des Rotors 28 gesteuert. Das Ausgangssignal "HALL" des Sensors 30 wird über eine Leitung 34 einem digitalen Rechner (hier einem Mikrocontroller) 36 zugeführt und liefert diesem Informationen über die Drehstellung des Rotors 28.

Die H-Brücke 22 hat eine obere Brückenhälfte 38, bei der links ein p-Kanal-MOSFET T1 und rechts ein p-Kanal-MOSFET T2 vorgesehen sind. Zu T1 ist eine Freilaufdiode 40 und zu T2 ist eine Freilaufdiode 42 antiparallel geschaltet, deren Katoden über eine Verbindungsleitung 44 und eine Diode 45 an den positiven Pol 46 einer Spannungsquelle $U_B$ angeschlossen sind, deren Spannung in weiten Grenzen schwanken kann, z.B. zwischen 20 V und 80 V. Die Verbindungsleitung 44 bildet den positiven Teil eines sogenannten Gleichstrom-Zwischenkreises (dc link), dessen negativer Teil von Masse 50 gebildet wird. Zwischen der Katode der Diode 45 und Masse 50 ist ein Kondensator 48 angeschlossen, den man als Zwischenkreis-Kondensator 48 bezeichnet und der dazu dient, in bestimmten Situationen kurzzeitig einen Rückspeisestrom vom Motor 20 aufzunehmen und zu speichern, und gleich anschließend diese gespeicherte Energie an den Motor 20 zurück zu liefern, was nachfolgend näher erläutert wird. Dadurch fließt im Betrieb zwischen dem Motor 20 und dem Kondensator 48 ein Wechselstrom, dessen Frequenz von der Drehzahl des Motors 20 abhängt und dessen Höhe möglichst klein sein sollte, da dieser Strom zu einer Erwärmung des Kondensators 48 führt und daher dessen Lebensdauer, und folglich auch die Lebensdauer des Motors 20, verringert.

Die Anode der Diode 40 ist mit einem Knotenpunkt 52 verbunden, diejenige der Diode 42 mit einem Knotenpunkt 54. Der Wicklungsstrang 26 ist zwischen den Knotenpunkten 52, 54 angeordnet.

Die H-Brücke 22 hat auch eine untere Brückenhälfte 56, bei der links ein n-Kanal-MOSFET T3 und rechts ein n-Kanal-MOSFET T4 vorgesehen sind. Zu T3 ist eine Freilaufdiode 58 und zu T4 eine Freilaufdiode 60 antiparallel geschaltet. Die Katode der Diode 58 ist mit dem Knotenpunkt 52 verbunden, die der Diode 60 mit dem Knotenpunkt 54. Die Anoden der Dioden 58, 60 sind über eine Verbindungsleitung 62 und einen niederohmigen Messwiderstand 59 mit Masse 50 verbunden. An dem Messwiderstand 59 tritt im Betrieb eine Spannung $u_R$ auf, und diese wird, über eine passiven Tiefpass 61, gebildet von einem Widerstand 63 und einem Kondensator 64, einem ersten Eingang eines A/D-Wandlers 85, z.B. im $\mu$C 36, zugeführt, und dort in einen digitalen Wert umgewandelt. Sofern der A/D-Wandler 85 mit 8 Bits ausgebildet ist, liegt dieser digitale Wert zwischen 0 und 255 Digits. Beim Ausführungsbeispiel wurde für den $\mu$C 36 der Typ PIC16F684 verwendet, der einen A/D-Wandler mit acht Eingangskanälen und einen PWM-Generator 84 aufweist, der eine Frequenz im Bereich 15 bis 30 kHz hat.

Da der A/D-Wandler 85 nur positive Signale verarbeiten kann, jedoch die Spannung UR am Messwiderstand 59 im Betrieb auch negativ werden kann, wird diese Spannung UR elektrisch in positiver Richtung verschoben. Hierzu ist der Ausgang des Tiefpasses 61 mit einem Knotenpunkt 65 verbunden, der über einen Widerstand 67 mit Masse 50 und über einen Widerstand 68 mit einer geregelten Spannung +Vcc verbunden ist, an welche auch der $\mu$C 36 angeschlossen ist.

**Beispiel**

Bei einem Versuchsaufbau wurden für die Bauelemente folgende Werte verwendet:

| Motor 20 für Lüfterantrieb | |
| --- | --- |
| Betriebsspannung | 48 V |
| Aufnahmeleistung | 18 W |
| Vcc | + 5 V |
| Widerstand 59 | 0,26 Ohm |
| Widerstände 63, 67 | 1 kOhm |
| Widerstand 68 | 4 kOhm |
| Kondensator 64 | 1 nF. |

Diese Werte sind naturgemäß von verschiedenen Faktoren abhängig und dienen nur zur Erläuterung eines Beispiels. Die Bauteile gemäß diesem Beispiel dienen auch zur Implementierung eines adaptiven Reglers, wie er in der deutschen Patentanmeldung 10 2008 008 080.2 vom 29. Januar 2008 ausführlich beschrieben ist. Dieser Regler dient zur Reduzierung des Wechselstroms, der im Betrieb in den Kondensator 48 fließt.

Am Messwiderstand 59 erhält man nur eine Spannung $u_R$, wenn ein Strom $i_R$ fließt. Ist $i_R = 0$, so erhält man einen charakteristischen Wert für u67, der bei den Bauelementen gemäß dem Beispiel einen Wert von etwa 1 V hat, und diese Spannung wird zur besseren Identifizierung uzero genannt.

Die Messung von Uzero erfolgt, wenn ein Kreisstrom i* in der unteren Brückenhälfte 56 fließt. Dies kann entweder im Uhrzeigersinn oder entgegen dem Uhrzeigersinn sein. In beiden Fällen sind in Fig. 1 die beiden oberen Halbleiterschalter T1 und T2 nichtleitend, und die beiden unteren Halbleiterschalter T3 und T4 sind leitend. Durch die Umschaltung fließt beim Kommutierungsvorgang kurzzeitig ein Kreisstrom i* oder -i* durch den Statorstrang 26 und durch die beiden unteren Halbleiterschalter T3 und T4 bzw. deren Dioden 58 oder 60.

Da die beiden oberen Halbleiterschalter T1 und T2 nichtleitend sind, kann in diesem Fall über den Widerstand 59 kein Strom iR zum oder vom Motor 20 fließen, so dass die Spannung U67 am Widerstand 67, also die Eingangsspannung des A/D-Wandlers 85, den Wert uzero hat, also den Wert, der dem Strom iR = 0 entspricht. Dieser Wert Uzero stellt eine Referenzspannung dar, auf die Änderungen bezogen werden. Dies ermöglicht die Digitalisierung von Spannungen UR, die entweder positiv - oder in bestimmten Fällen - negativ sein können und die durch die Anordnung mit den Widerständen 63, 67, 68 in einen positiven Bereich verschoben werden, in welchem die Digitalisierung durch den A/D-Wandler 85 möglich ist.

Die Halbleiterschalter T1 bis T4 werden über Steuerverbindungen 70, 72, 74, 76 vom $\mu$C 36 gesteuert. Hierzu

braucht dieser Informationen über die augenblickliche Rotorstellung, die er über das Signal HALL und ggf. auf sonstige Weise erhält, z.B. über Sensoren anderer Art, über die als Sensorless bekannte Messmethode, oder auf sonstige Weise.

Die Umschaltung der Stromrichtung im Strang 26 erfolgt im allgemeinen kurz vor der Änderung des Signals HALL, und zwar durch eine sogenannte frühzeitige Kommutierung, die man im Fachjargon meist als Frühzündung oder Frühkommutierung bezeichnet.

**Arbeitsweise**

Im Betrieb werden - je nach der Drehstellung des Rotors 28 - z.B. als erstes die beiden Halbleiterschalter T1 und T4 leitend gemacht, so dass ein Stromimpuls $i_1$ vom Anschluss 46 über die Diode 45, den Halbleiterschalter T1, den Knotenpunkt 52, den Wicklungsstrang 26, den Knotenpunkt 54, den Halbleiterschalter T4 und den Messwiderstand 59 nach Masse 50 fließt. Die Amplitude des Stromimpulses $i_1$ wird bestimmt durch das Tastverhältnis pwm, das vom PWM-Generator 84 erzeugt und in diesem Fall dem Halbleiterschalter T4 zugeführt wird. (Die oberen Transistoren T1, T2 werden alternierend voll eingeschaltet oder voll ausgeschaltet.)

Auf den Stromimpuls $i_1$ folgt ein Kommutierungsvorgang, während dessen die Halbleiterschalter T3 und T4 durch den PWM-Generator 84 ständig eingeschaltet werden, und an dessen Anfang die externe Energiezufuhr zum Motor 20 unterbrochen wird, indem - bei diesem Beispiel - der Halbleiterschalter T1 nichtleitend gemacht wird.

Wenn am Ende des Kommutierungsvorgangs im Wicklungsstrang 26 kein Strom i1 mehr fließt, wird T4 nichtleitend gemacht, und die Halbleiterschalter T2 und T3 werden leitend gemacht, so dass jetzt ein Stromimpuls i1' vom Anschluss 46 über die Diode 45, den Halbleiterschalter T2, den Knotenpunkt 54, den Strang 26, den Knotenpunkt 52, den Halbleiterschalter T3 und den Messwiderstand 59 nach Masse 50 fließt.

Anschließend an die Kommutierung wird also der Halbleiterschalter T4 gesperrt, im Idealfall exakt dann, wenn der Kreisstrom i* gerade den Wert Null erreicht hat, und der Halbleiterschalter T2 wird eingeschaltet, so dass jetzt ein Stromimpuls i1' fließt, dessen Amplitude ebenfalls durch ein PWM-Signal vom PWM-Generator 84 gesteuert wird, das jetzt dem Halbleiterschalter T3 zugeführt wird.

Gleichzeitig hiermit wird durch den A/D-Wandler 85 die analoge Spannung u67 als digitaler Wert gemessen, wodurch indirekt die Höhe der Spannung am Messwiderstand 59 erfasst wird.

Wenn der Motor 20 optimal geregelt ist, hat die Spannung u67 bei der Messung direkt nach der Kommutierung ebenfalls den Referenzwert Uzero, d.h. in diesem Fall arbeitet die Kommutierung ideal und braucht nicht verändert zu werden. Der Motor 20 arbeitet mit einem sehr guten Wirkungsgrad, und der Strom zum Zwischenkreiskondensator 48 wird sehr klein, so dass dieser Kondensator nicht erwärmt wird und eine hohe Lebensdauer hat.

Ist jedoch die Kommutierung noch nicht (oder nicht mehr) optimal eingestellt, z.B., weil sich die Spannung UB verändert hat, so wird bei der Kommutierung die Spannung uR kurzzeitig negativ, und dementsprechend wird die Spannung U67 kleiner als uzero. Auf diese Weise ist es möglich, den Motor 20 fortlaufend zu optimieren. Dies ist naturgemäß besonders wichtig, wenn der Motor 20 an Betriebsspannungen betrieben wird, die in einem großen Spannungsbereich liegen.

Es ergibt sich also folgendes Schema:

T1, T4 leitend; T2, T3 nichtleitend -> der Wicklungsstrang 26 wird in der einen Richtung bestromt (Stromimpuls i1).
T3, T4 leitend; T1, T2 nichtleitend -> Strom i* kreist im unteren Teil 56 der H-Brücke 22.
T2, T3 leitend; T1, T4 nichtleitend -> der Wicklungsstrang 26 wird in der anderen Richtung bestromt (Stromimpuls i1').
T3, T4 leitend; T1, T2 nichtleitend -> Strom -i* kreist im unteren Teil 56 der H-Brücke 22.

Zur Erfassung der Spannung am Zwischenkreis (dc link) 44 ist dieser an den Widerstand 78 eines Spannungsteilers 78, 77 angeschlossen, der dazu dient, die Spannung am Zwischenkreis 44 auf eine Größe im Bereich 0 ... +4 V zu reduzieren, die vom A/D-Wandler 85 verarbeitet werden kann. Zum Widerstand 77 ist ein Kondensator 83 parallel geschaltet. Zusammen bilden sie einen Tiefpass, der hochfrequente Störungen ausfiltert. Der Widerstand 77 ist unten an Masse 50 angeschlossen. Der Abgriff 79 des Spannungsteilers 77, 78 ist über einen Widerstand 82 mit einem zweiten Eingang des A/D-Wandlers 85 verbunden. Die Spannung an diesem Eingang wird im Betrieb in einen digitalen Wert umgewandelt, der zwischen 0 und 255 Digits liegt und ein Maß für die Spannung UB darstellt.

Zur Messung der Temperatur ist an die geregelte Spannung Vcc (+5 V) ein Spannungsteiler aus einem Festwiderstand 76 und einem NTC-Widerstand 75 angeschlossen, welch letzterer an Masse 50 angeschlossen ist. Der Abgriff 87 dieses Spannungsteilers ist über einen Widerstand 81 mit einem dritten Eingang des A/D-Wandlers 85 verbunden. Auf diese Weise wird das Potential am Abgriff 87 in einen digitalen Wert umgewandelt, der z.B. zwischen 0 und 255 Digits liegt und ein Maß für die Temperatur des Motors 20 darstellt. Dieser digitale Wert wird dazu verwendet, bei sehr tiefen Temperaturen den Startstrom des Motors 20 so zu erhöhen, dass ein sicherer Anlauf möglich ist. (Manche etwas überdimensionierten Motoren benötigen diese Maßnahmen nicht.)

Im µC 36 befindet sich auch ein ROM 35 mit einem Programm für die Steuerung und Regelung des Motors 20, ferner ein Drehzahlregler 90 (n_CTL), welcher nach dem Start die Drehzahl des Motors 20 regelt, ein Timer 73, und ein Komparator 88. Das Zusammenwirken dieser Teile wird nachfolgend beschrieben.

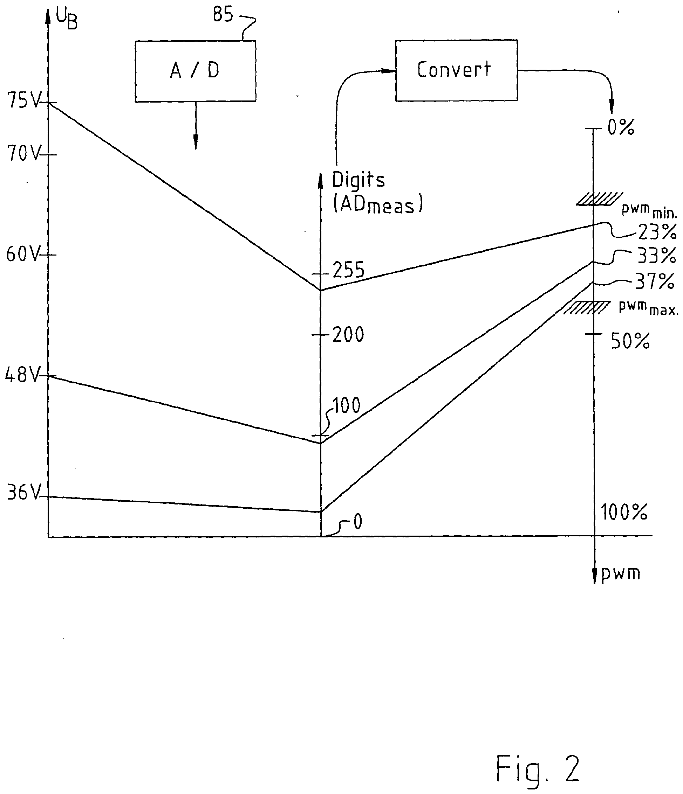

Fig. 2 dient der Erläuterung. Links ist der Bereich der Betriebsspannungen UB dargestellt, mit denen der Motor 20 arbeiten kann. Bei diesem Beispiel geht er von 36 V bis 75 V, also ein Spannungsverhältnis von 1 : 2. Da die angelegte Spannung UB auch bei 36 V noch größer sein muss als die Spannung, die im Betrieb im Strang 26 durch den Rotor 28 induziert wird, hat der Strang 26 nur eine geringe Zahl von Windungen aus einem relativ dicken Draht, und er hat folglich einen niedrigen Innenwiderstand. Im Jargon der Ingenieure wird das eine "scharfe Wicklung" genannt, die an die Regelung besonders hohe Anforderungen stellt. (Diese Art der Motorcharakteristik ist sonst bei Gleichstrommotoren nicht üblich.)

Durch den A/D-Wandler 85 wird UB in eine digitale Zahl umgewandelt. Als Beispiel könnte UB = 75 V umgewandelt werden in 240 Digits, wenn der Wandler 85 für 8 Bit ausgelegt ist.

Diese 240 Digits werden im µC 36 z.B. konvertiert in ein Tastverhältnis des Motorstroms i1 oder i1' von 23 %, da in diesem Fall die Betriebsspannung von 75 V bei der Betriebsdrehzahl mehr als doppelt so hoch ist wie die im Strang 26 induzierte Spannung.

Die Stromimpulse i1 und i1' haben also hier während der Startphase des Motors 20 bei UB = 75 V ein Tastverhältnis von 23 %, und dieses Tastverhältnis wird während der Startphase T1 (Fig. 6) konstant gehalten. Dabei nimmt die Drehzahl zu, ebenso die induzierte Spannung, so dass die Amplitude dieser Stromimpulse bereits in der Startphase abnimmt.

Am Beginn eines Kommutierungsvorgangs bleiben die beiden Halbleiterschalter T3 und T4 kontinuierlich eingeschaltet, da dann durch sie kurzzeitig ein Kreisstrom i* oder -i* fließt, der die magnetische Energie, welche im Wicklungsstrang 26 gespeichert ist, in mechanische Energie zum Antrieb des Rotors 28 umsetzt. Dies ermöglicht eine weitgehend stromlose Umschaltung vom Stromimpuls i1 auf den Stromimpuls i1' oder umgekehrt. Außerdem wird auf diese Weise der sogenannte Rippelstrom (ripple current) zum Kondensator 48 niedrig gehalten.

Die Startphase dauert im allgemeinen so lange, dass der Motor 20 starten kann und eine ausreichende Drehzahl erreicht. Oft genügt hierfür ein Bereich von etwa 0,5 ... 5 Sekunden, je nach Größe des Motors 20. Bei Lüftermotoren hat sich ein Wert von etwa 1 Sekunde als günstig herausgestellt.

Der Drehzahlregler 90 ist im allgemeinen ein PI-Regler oder ein PID-Regler, und während der Startphase wird er deaktiviert, d.h. seine P-Werte und I-Werte werden auf oder in der Nähe von Null gehalten, damit der Drehzahl-Regelvorgang erst wirksam werden kann, wenn die Startphase T1 zu Ende ist.

Der Komparator 88 dient zur analogen Strombegrenzung. Er hat einen Ausgang 88A und einen negativen Eingang 91, der an eine interne Referenz "Ref." im µC 36 angeschlossen ist. Beim verwendeten µC 36 kann die interne Referenz "Ref." über Software in 16 Stufen frei gewählt werden, doch kann naturgemäß jeder beliebige Komparator und jede beliebige Referenzspannung verwendet werden. Die Größe der Spannung "Ref." definiert die Höhe des Stroms $i_R$ durch den Widerstand 59, bei dem die Strombegrenzung einsetzt.

Dem positiven Eingang des Komparators 88 wird die Spannung u67 (am Widerstand 67) zugeführt, die ein Maß für den Strom iR im Widerstand 59 ist.

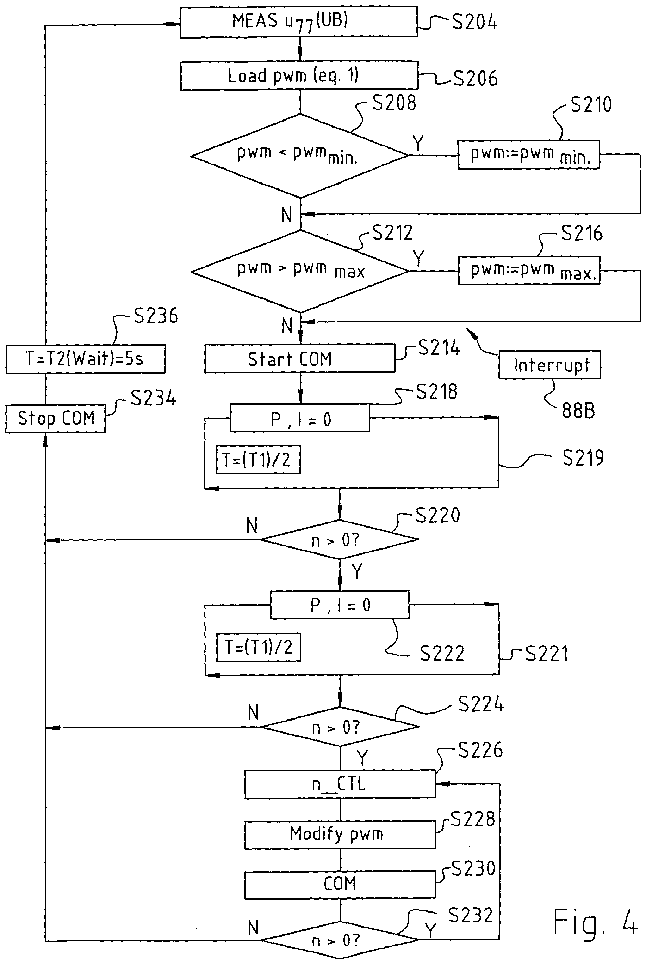

Übersteigt der Strom iR, und damit die Spannung u67, die Höhe der internen Referenz "Ref." am negativen Eingang 91, dann wird über die Änderung des Signals am Ausgang 88A ein Interrupt "Intrpt" erzeugt, welcher in Fig. 4 bei 88B angedeutet ist, das in Fig. 4 dargestellte Hauptprogramm unterbricht, und dadurch eine schnelle Reaktion auf einen Überstrom ermöglicht, was bei Motoren dieser Art sehr vorteilhaft ist.

Bei der Ausführung des Interrupts 88B werden die oberen Endstufentransistoren T1 und T2 gesperrt, und die unteren Endstufentransistoren T3 und T4 werden beide leitend gesteuert, so dass in ihnen ein Kreisstrom i* oder -i* fließt, der innerhalb kurzer Zeit abklingt und dabei den Rotor 28 antreibt. Auf diese Weise wird die im Magnetfeld der Wicklung 26 gespeicherte magnetische Energie in mechanische Energie zum Antrieb des Rotors 28 umgesetzt, so dass der Wechselstrom zum Zwischenkreiskondensator 48 einen niedrigen Wert hat. Dies vermeidet eine übermäßige Erwärmung des Kondensators 48 und verlängert dessen Lebensdauer.

Beim nächsten Zyklus des PWM-Moduls 84 wird erneut entweder die Kombination T1-T4 oder die Kombination T2-T3 eingeschaltet.

Wenn im Zeitraum zwischen zwei Änderungen des Signals HALL zu viele Interrupts durch ein zu großes $i_R$ erzeugt werden, so werden alle Transistoren T1 bis T4 abgeschaltet, und die Elektronik wird in eine sogenannte Blockierschutztaktung versetzt, bei der z.B. nach jeder fünften Sekunde Stromimpulse mit dem berechneten Tastverhältnis im Strang 26 erzeugt werden. Dabei wird geprüft, ob der Motor startet, wie nachfolgend beschrieben.

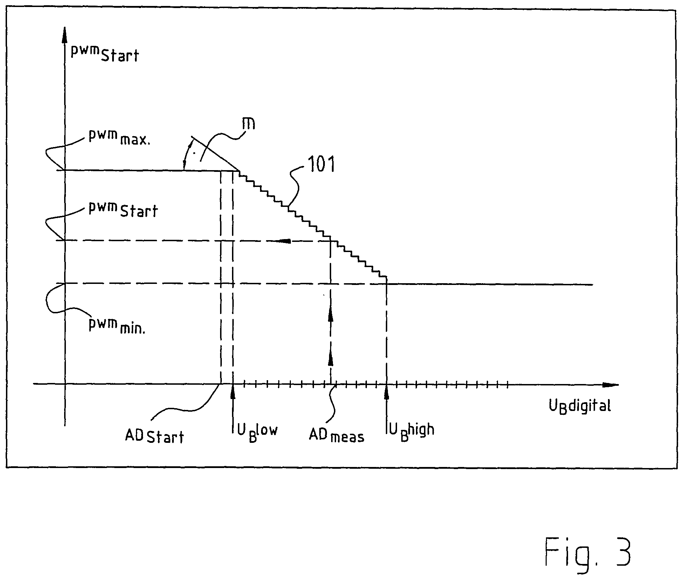

Fig. 3 dient zur Erläuterung der Umwandlung eines digitalisierten Wertes $U_{Bdigital}$ für die Betriebsspannung UB in einen für den betreffenden Motortyp geeigneten PWM-Wert pwm.

Der Ingenieur oder Techniker, der den betreffenden Motor dimensioniert, muss naturgemäß die Wicklung so auslegen, dass auch bei der niedrigsten Betriebsspannung noch ein genügend hoher Motorstrom fließen kann. Ferner kann er oder sie verschiedene Werte vorgeben, nämlich einmal den maximalen PWM-Wert $pwm_{max}$ für den Startstrom, in Fig. 2 z.B. 37 %, den minimalen Wert pwmmin, der naturgemäß größer sein muss als Null und z.B. in Fig. 2 23 % beträgt, und schließlich die Steigung (slope) m der Treppenkurve 101, welche grafisch die Umsetzung eines berechneten digitalen Wertes AD in einen Wert pwm symbolisiert, mit dem der Motorstrom imot während des Startzeitraums T1 aus- und eingeschaltet wird, um einen sicheren Anlauf mit einem gewünschten maximalen Strom zu gewährleisten, oder mit anderen Worten: Eine Strombegrenzung während des Anlaufs mit einfachen und preiswerten Mitteln..

In der Realität erfolgt die Umsetzung des gemessenen Wertes ADmeas in einen entsprechenden PWM-Wert durch den $\mu$C 36, und Fig. 3 dient nur zur Erklärung der Vorgänge, die im Betrieb beim Start des betreffenden Motors ablaufen und die bei der Auslegung des Motors berücksichtigt werden müssen.

Zweckmäßig wird auch eine Konstante ADstart gewählt. Dies ist ein konstanter digitaler Startwert für die Versorgungsspannung. Wenn die Versorgungsspannung $U_B$ über diesen Startwert hinaus ansteigt, beginnt der $\mu$C36, das Tastverhältnis pwm (für die Zeitspanne T1 der Fig. 6) zu reduzieren, um das Drehmoment beim Start etwa konstant zu halten.

Fig. 4 zeigt ein schematisiertes Flussdiagramm für den Ablauf der Berechnungsvorgänge, in Abhängigkeit von der Betriebsspannung $U_B$, die hier in weiten Grenzen schwanken kann, z.B. zwischen 20 und 80 V.

Bei S204 wird die Spannung $u_{77}$ am Widerstand 77 gemessen, die von der Betriebsspannung $U_B$ abgeleitet ist, und deshalb ein Maß für die Betriebsspannung darstellt. Dies geschieht mit dem A/D-Wandler 85 im $\mu$C36, an dessen Ausgang man einen Wert $AD_{meas}$ in Digits erhält, also z. B. einen numerischen Wert in Digits zwischen 0 und 255. Dieser wird verglichen mit dem festgelegten Wert ADstart, der in Fig. 3 dargestellt ist und der einer niedrigen Betriebsspannung für diesen Motor 20 entspricht, so dass bei dieser Spannung ein hohes Tastverhältnis $pwm_{max}$ für den Motorstrom notwendig ist.

Liegt die gemessene Betriebsspannung $AD_{meas}$ höher als ADstart, so bedeutet das, dass das Tastverhältnis pwm gegenüber $pwm_{max}$ reduziert werden muss, da sonst der Motorstrom beim Start zu hoch würde. Dies geschieht gemäß der nachfolgenden Formel, die in S206 der Fig. 4 verwendet wird:

$$pwm = pwm_{max} - (AD_{meas} - AD_{start}) * m \qquad \ldots(1)$$

Hierbei bedeuten

| | |
|---|---|
| pwm | Tastverhältnis, das in Fig. 6 im Zeitraum Ta berechnet und in der Zeitspanne T1 zur Steuerung des Startstroms $i_{mot}$ verwendet wird |
| $pwm_{max}$ | maximaler pwm-Wert für den Startstrom während der Zeitspanne T1 |
| ADstart | wählbarer digitaler Startwert für die Versorgungsspannung $U_B$, in Digits, |
| $AD_{meas}$ | digitaler Wert für die (variable) Versorgungsspannung $U_B$, in Digits |
| m | frei wählbarer Faktor |

**Beispiel**

Nimmt man in Gleichung (1) folgende Werte an:

m=0,14
ADstart = 10 Digits
$AD_{meas}$ = 95 Digits
$pwm_{max}$ = 42 %,

so erhält man

$$pwm = 42\ \% - (95\ Digits - 10\ Digits) * 0,14 = 30,1\ \% \qquad \ldots (2)$$

Mit diesem Tastverhältnis von 30,1 % und einer Frequenz im Bereich von etwa 15 kHz bis etwa 25 kHz wird anschließend (S214, S218, S219) der von einer (symbolisch dargestellten) äußeren Energiequelle 47 zugeführte Motorstrom während des Startzeitraums T1 ein- und ausgeschaltet.

Als nächstes wird in S208 geprüft, ob der in S206 berechnete Wert pwm kleiner ist als pwmmin. Wie Fig. 2 zeigt, ist das bei diesem Beispiel nicht der Fall, da hier pwmmin = 20 % ist. Wäre bei S208 das Ergebnis JA (Y), so würde in S210 der pwm-Wert auf 20 % festgesetzt, da für den Start ein bestimmter Mindestwert des Tastverhältnisses erforderlich ist. (Bei pwm = 0 % hätte der Motorstrom den Wert 0.)

Auf S208 (bzw. S210) folgt S212, wo geprüft wird, ob das in S206 ermittelte pwm größer ist als $pwm_{max}$ ist.

Falls NEIN, geht das Programm zu S214. Falls JA, geht das Programm zu S216, wo für pwm der Wert $pwm_{max}$ festgesetzt wird, um einen zu hohen Startstrom zu vermeiden. Anschließend an S216 geht das Programm zu S214, wo der Motor mit dem ermittelten Wert für pwm gestartet wird.

Während einer Zeit T, die z. B. 0,5 s betragen kann, läuft bei S219 der Motor 20 mit einem Strom, der dieses Tastverhältnis hat, wobei in S218 die Werte P und I für den PI- oder PID-Drehzahlregler 90 ständig wieder auf Null (oder einen niedrigen Wert) zurückgestellt werden. (Der PWM-Steller 84 hat ein Register REG, in das die Werte für die Steuerung des PWM-Stellers 84 geschrieben werden.)

Nach Ablauf der Zeit T wird in einem Schritt S220 geprüft, ob sich der Rotor 28 dreht, d.h. ob die Drehzahl n größer als Null ist. Dies kann durch Prüfung des Signals HALL erfolgen. Falls NEIN, geht das Programm zu einem Schritt S234, wo die Kommutierung des Motors 20 abgeschaltet wird, da sich dieser nicht dreht, also blockiert ist. Im anschließenden Schritt S236 wartet der Motor 20 im stromlosen Zustand eine Zeit T2, die z. B. 5 s betragen kann, und geht dann zurück zu S204, um einen neuen Startversuch zu machen.

Lautet in S220 die Antwort JA, d. h. der Rotor 28 dreht sich, so geht - im Falle eines Drehzahlreglers 90 - das Programm zum Schritt S222, wo bei einem PI-Regler die P-Werte und die I-Werte des Reglers 90 ständig erneut auf Null gesetzt werden, damit der Drehzahlregler 90, der an sich ständig aktiviert ist, während dieser Phase keinen Einfluss auf die Drehzahl n des Motors 20 hat. Während dieser Zeit wird bei S221 der bei S219 begonnene Prozess fortgesetzt.

Nach Ablauf einer weiteren Zeit T von z.B. 0,5 s wird bei diesem Ausführungsbeispiel im Schritt S224 erneut geprüft, ob sich der Rotor 28 dreht.

Falls die Antwort in S224 JA lautet, dreht sich der Rotor 28, und es beginnt der reguläre Start des Motors 20. Falls Nein, geht das Programm zu S234.

Der reguläre Start kann durch den Drehzahlregler 90 gesteuert werden, oder durch einen Stromregler, oder auch durch einen Stellantrieb, d. h. der Motor 20 wird nach Abschluss der Phase T1 voll an die Spannung $U_B$ angeschlossen und läuft auf die Drehzahl hoch, die dieser Spannung $U_B$ entspricht. Dies hat den Vorteil, dass die Drehzahl des Motors 20 gesteuert werden kann, indem man die Spannung $U_B$ verändert. Diese Methode ist z. B. in Telefonämtern üblich, wo auf diese Weise die Drehzahl bei einer großen Zahl von Lüftern simultan verändert werden kann, um z.B. an einem heißen Tag die Kühlung zu erhöhen.

Bei der in Fig. 4 dargestellten Variante geht das Programm im Schritt S224 bei der Antwort JA zum Schritt S226 "n_CTL" und dann weiter zum Schritt S228, wo ggf. das Tastverhältnis pwm vom Drehzahlregler n_CTL verändert wird, um die gewünschte Drehzahl zu erreichen. Der Schritt S230 symbolisiert die Kommutierung bei der Drehung des Rotors 28, die fortlaufend stattfindet, wie das dem Fachmann für solche Motoren bekannt ist.

In S232 wird erneut geprüft, ob sich der Rotor 28 dreht. Falls NEIN, geht das Programm zurück zu S234, S236 und S204, wie bereits beschrieben, d. h. der Motor 20 wird jeweils 5 Sekunden lang still gesetzt und versucht dann zwischendurch, neu zu starten.

Wird in Schritt S232 festgestellt, dass sich der Motor 20 dreht, so geht das Programm zurück zu S226, und die Drehung mit der Solldrehzahl wird fortgesetzt.

Auf diese Weise gelingt es, den Motor 20 sicher in einem großen Spannungsbereich zu betreiben, z. B. in einem Bereich von 20 V bis 80 V, ohne dass bei 20 V der Anlauf unsicher wird, oder dass bei 80 V der Startstrom zu hoch wird.

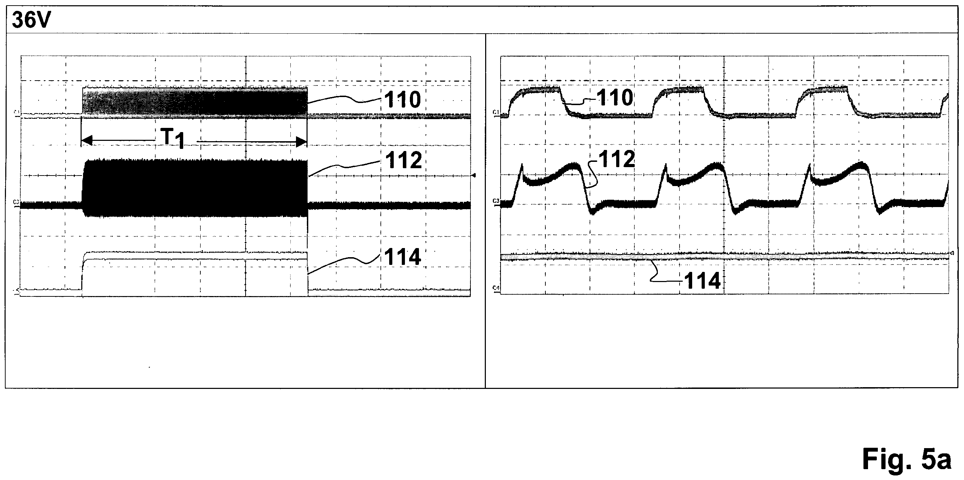

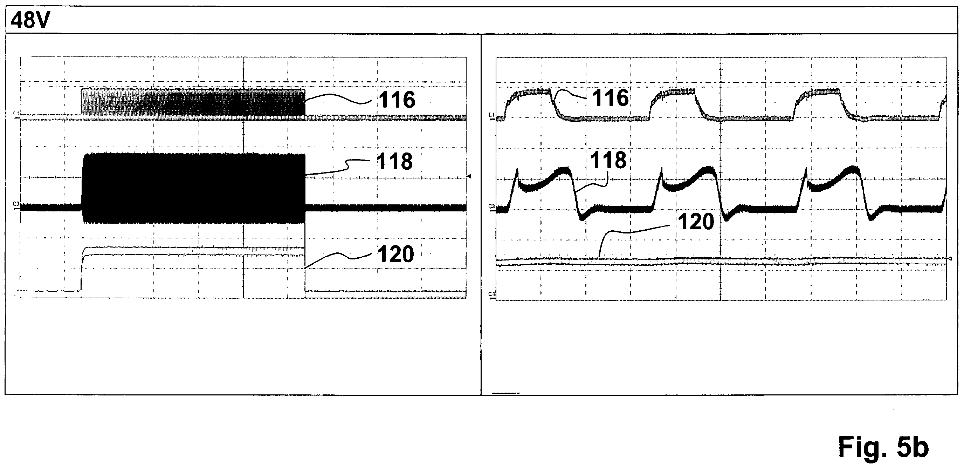

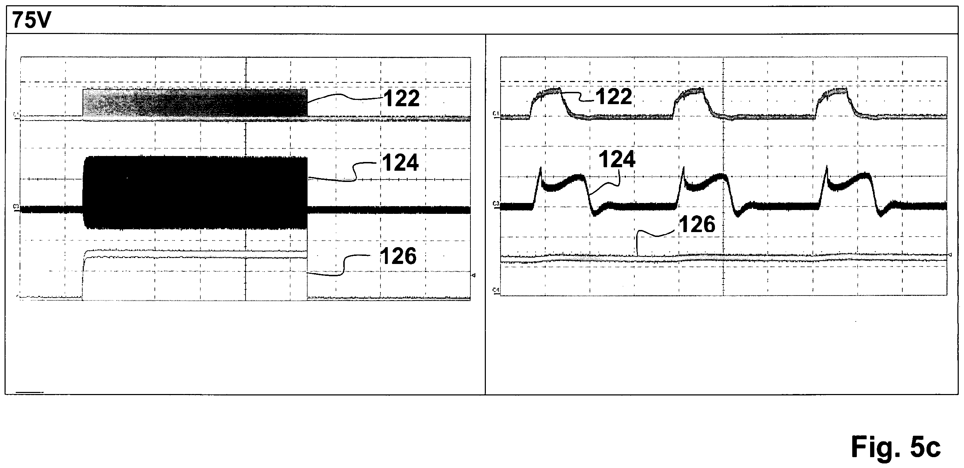

**Fig. 5** zeigt verschiedene Signale, die bei blockiertem Motor an diesem gemessen werden können. Die oberste Zeile (Fig. 5a) zeigt den Betrieb eines Motors 20 mit einer Unterspannung von 36 V.

Die mittlere Zeile (Fig. 5b) zeigt den Betrieb dieses Motors mit seiner Nennspannung von 48 V, und die unterste Zeile (Fig. 5c) zeigt seinen Betrieb mit einer Überspannung von 75 V.

Bei 110 ist in Fig. 5a) bei der Unterspannung von 36 V das Tastverhältnis dargestellt, das in diesem Falls 37 % beträgt. Links sind die Signale während der Zeit T1 dargestellt, die hier eine Sekunde beträgt, und rechts ist ein Ausschnitt dargestellt, der die Signale mit wesentlich höherer zeitlicher Auflösung zeigt.

Bei 112 ist der Eingangsstrom imot des Motors 20 gezeigt, und bei 114 der Strom $i_1$ in der Wicklung 26. Eine Kommutierung ist nicht dargestellt, da sich der Motor 20 im blockierten Zustand nicht drehen kann.

Bei 116 (Fig. 5b) ist - für eine Nennspannung von 48 V - das Tastverhältnis dargestellt. Dieses ist niedriger als bei Fig. 5a) und beträgt hier 33 %. Die Kurven 118 zeigen den Eingangsstrom imot des Motors 20, und die Kurven 120 den Wicklungsstrom $i_1$, der sich von Fig. 5a) nicht unterscheidet.

Fig. 5c) zeigt oben bei 122 das Tastverhältnis bei einer Überspannung von 75 V, das hier nur 23 % beträgt. Bei 124 ist der Eingangsstrom imot dargestellt, und bei 126 der Wicklungsstrom $i_1$, der sich vom Wicklungsstrom 114 bei 36 V oder vom Wicklungsstrom 120 bei 48 V nicht unterscheidet.

Auf diese Weise erhält man also trotz unterschiedlicher Betriebsspannungen $U_B$ einen Strom imot beim Start, der weitgehend identisch ist. Durch die anschließende Regelung, sofern eine solche vorgesehen ist, ergibt sich auch ein identisches Verhalten im Betrieb, d. h. der Benutzer bemerkt keinen Unterschied, wenn er seinen Motor an verschiedene Gleichspannungen anschließt.

**Fig. 6** zeigt einen typischen Verlauf des Motorstroms imot beim Start.

Zum Zeitpunkt t1 wird der Motor 20 eingeschaltet, was auch die Folge eines vorhergehenden Blockiervorganges sein kann. Im anschließenden Zeitabschnitt Ta werden die Schritte S204 bis S216 der Fig. 4 ausgeführt, wobei der Motor 20 noch still steht.

Wenn nach Abschluss der Schritte S1212 bzw. S216 der pwm-Wert für den Start berechnet ist, werden in Fig. 4 während der Zeitspanne $T_1$ die Schritte S119 wiederholt durchgeführt, wodurch der Motor 20 mit dem berechneten pwm startet und seine Drehzahl n zunimmt.

Zu Beginn der Zeitspanne Ta dreht sich der Motor 20 noch nicht, d.h. die Spannung, auch "induzierte Spannung" genannt, die durch den permanentmagnetischen Rotor 28 im Wicklungsstrang 26 induziert wird, hat hier noch den Wert 0.

Deshalb springt direkt nach dem Einschalten, also am Anfang der Zeitspanne $T_1$ der Motorstrom imot auf einen hohen Wert 128, hier z.B. auf etwa 950 mA. Da der Motor 20 rasch startet, steigt die induzierte Spannung rasch an, wodurch imot innerhalb von 500 ms auf etwa 250 mA fällt.

Nach dem Ende der Zeitspanne $T_1$ geht das Programm der Fig. 4 zur Drehzahlregelung n_CTL, also zu den Schritten S226, S228, S230, S232. Dies bewirkt am Ende der Zeitspanne $T_1$ einen Anstieg 130 des Stromes imot um etwa 160 mA. Anschließend hieran steigt der Motorstrom $i_{mot}$ innerhalb von etwa 3 Sekunden auf etwa 1350 mA, und die (nicht dargestellte) Drehzahl des Motors 20 steigt auf den gewünschten Wert, z.B. auf 5000 U/min.

Man erkennt bei diesem Beispiel, dass der Startstrom 128 (950 mA) nur etwa 70 % des Laufstroms (running current) 132 (1350 mA) beträgt, was bei vielen Anwendungen vorteilhaft ist.

Der Anlaufvorgang eines solchen Motors 20 setzt sich also zusammen aus einer Mess- und Berechnungsphase Ta, in der die Betriebsspannung $U_B$ erfasst und digitalisiert wird und in der für diese digitalisierte Spannung ein Wert pwm für den Start ermittelt wird. Diese Vorgänge finden in Fig. 6 während der Zeit Ta statt.

Hierauf folgt eine Startphase ($T_1$ in Fig. 6), in der der Motorstrom imot ständig mit dem ermittelten Tastverhältnis pwm aus- und eingeschaltet wird, wodurch der Motor 20 startet und seine Drehzahl zunimmt. Dabei werden die Rechenergebnisse P, I des - an sich aktiven - digitalen Drehzahlreglers 90 ständig unterdrückt (Schritte S218, S222 der Fig. 4).

Am Ende der Zeitspanne $T_1$ wird die Drehzahlregelung n_CTL aktiviert, so dass die Drehzahlregelung beginnt, und die Drehzahl n des Motors 20 läuft auf einen Wert hoch, der am Drehzahlregler als Sollwert eingestellt wurde. Dies wird erreicht durch eine entsprechende Steuerung des Wertes für das Tastverhältnis pwm.

Der Übergang von der Zeitspanne $T_1$ mit konstantem pwm zur Phase n_CTL (mit variablem pwm) ist in Fig. 6 durch die Stelle 130 zu erkennen, an welcher der Strom um etwa 160 mA sehr rasch zunimmt.

Durch eine geschickte Verkettung von verschiedenen Abläufen erhält man also einen Motor, der z.B. in einem Spannungsbereich von 20 V bis 80 V mit weitgehend identischen Eigenschaften betrieben werden kann, und der zudem mit einem Startstrom (Fig. 6: 128) gestartet werden kann, der niedriger ist als der Laufstrom (Fig. 6: 132).

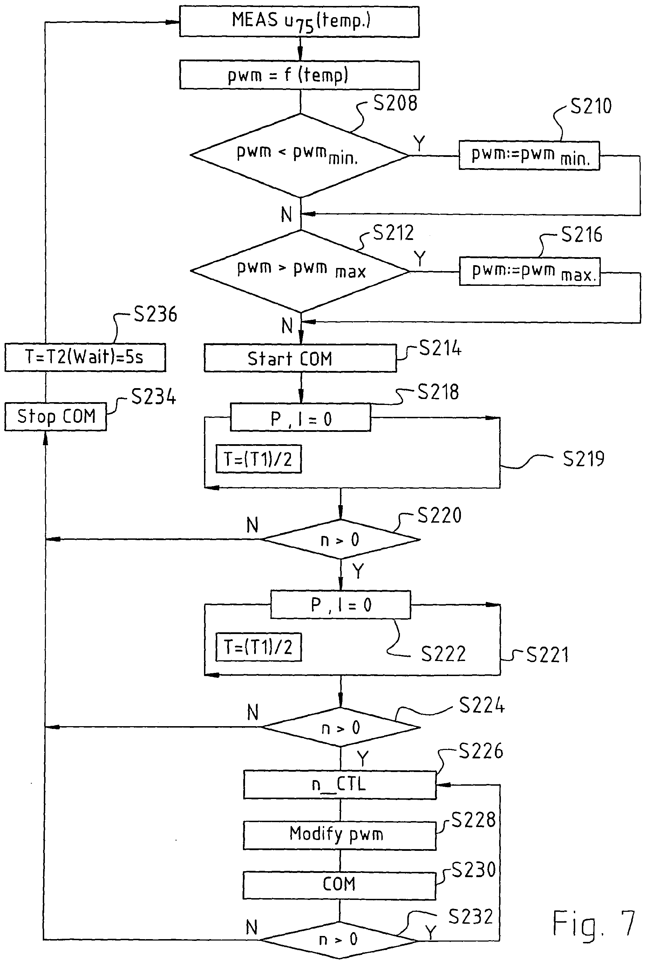

Fig. 7 zeigt eine Modifikation von Fig. 4. Übereinstimmende Schritte sind mit den gleichen Bezugszeichen bezeichnet wie dort und werden nicht nochmals beschrieben.

Bei Fig. 7 wird der Energieinhalt des Startstroms (128 in Fig. 6) gesteuert von der Temperatur des NTC-Widerstands 75 der Fig. 1. Am Widerstand 75 tritt im Betrieb eine Spannung $u_{75}$ auf, die ein variabler Parameter des Motors ist, da sie bei tiefen Temperaturen hoch ist und mit zunehmender Temperatur abnimmt.

Die Spannung $u_{75}$ wird im µC 36 durch den AD-Wandler 85 digitalisiert, wodurch man einen Wert ADmeas erhält, der hier z.B. im Bereich zwischen 0 und 255 Digits liegen kann. Abhängig von diesem Wert wird bei tiefen Temperaturen das Tastverhältnis pwm erhöht, damit dieser Strom mit abnehmender Temperatur zunimmt.

Dieser temperaturabhängige Wert pwm wird dann in S208, S210, S212, S214 den dort beschriebenen Prüfungen unterworfen, und der weitere Ablauf ist so wie bei Fig. 4 ausführlich beschrieben.

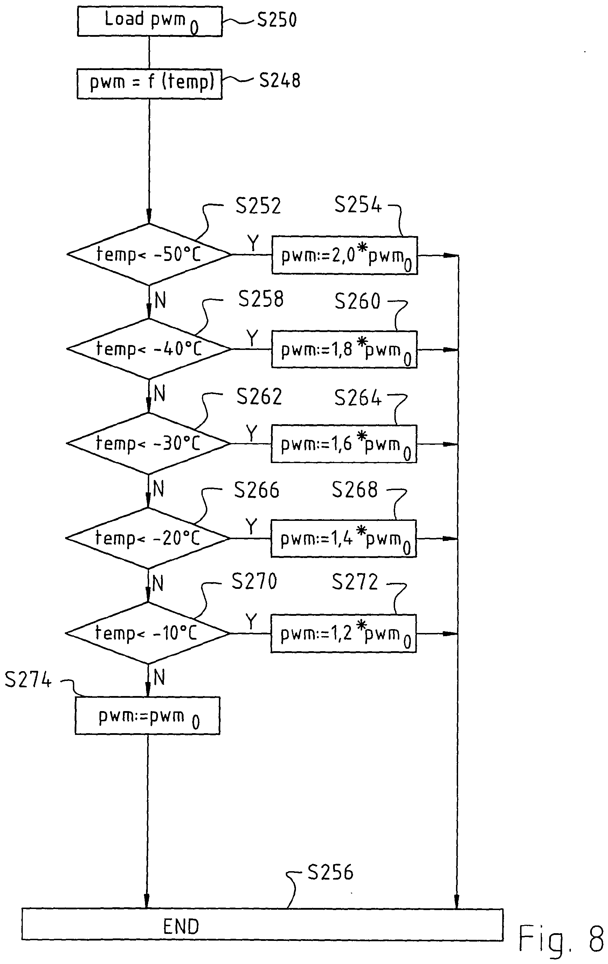

**Fig. 8** zeigt die Ermittlung des Wertes pwm abhängig von der Temperatur mittels einer Routine S248, welche bezeichnet ist mit pwm = f(temp).

Zunächst wird in S250 ein Tastverhältnis pwmo geladen, das bei einem Motor 20 mit der Nennspannung 48 V z.B. 33 % betragen kann, wie in Fig. 2 als Beispiel angegeben. Dieses Tastverhältnis pwmo gilt für diesen Motor 20 bei einer normalen Betriebstemperatur zwischen -10° C und +100° C.

Anschließend wird im Schritt S252 geprüft, ob die Temperatur niedriger ist als -50° C. Solche niedrigen Temperaturen kommen bei Bahnlinien in arktischen Gebieten vor, z.B. in Kanada, und sie erfordern einen etwa doppelt so hohen Startstrom, da das Fett in den Kugellagern bei diesen niedrigen Temperaturen sehr hart wird.

Deshalb wird in S254 der in S250 geladene Wert pwmo verdoppelt, also z.B. auf 66 %, um einen sicheren Start zu ermöglichen. Anschließend geht das Programm zum Schritt S256, dem Ende dieser Routine.

Wird in S252 festgestellt, dass die Temperatur nicht tiefer ist als -50° C, so wird als nächstes im Schritt S258 geprüft, ob die Temperatur niedriger als -40° C ist. Falls ja, geht das Programm zu S260, wo der Wert $pwm_0$ mit 1,8 multipliziert wird, so dass im Beispiel der Wert pwm für den Start etwa 60 % beträgt. Anschließend geht das Programm zu S256.

Falls bei S258 die Antwort Nein ist, geht das Programm zu S262, wo geprüft wird, ob die Temperatur niedriger ist als -30° C. Falls ja, wird in S264 der Wert pwmo mit 1,6 multipliziert, also im Beispiel pwm = 33 % x 1,6 = 52,8 %, und mit diesem Wert wird dann der Motor 20 im Bereich T1 (Fig. 6) gestartet.

Falls bei S262 die Antwort Nein lautet, wird in S266 geprüft, ob die Temperatur niedriger ist als -20° C. Falls ja, wird in S268 $pwm_0$ mit 1,4 multipliziert, also beim Beispiel

pwm = 33 % x 1,4 = 46,2 %,

und mit diesem Wert wird also der Motor 20 gestartet, wenn seine Temperatur zwischen -20 und -30° C liegt.

Falls bei S266 die Antwort Nein lautet, wird in S270 geprüft, ob die Temperatur unter -10° C liegt, und falls ja, wird in S272 für pwm der Wert

pwm = 1,2 x pwmo

verwendet, also im Beispiel 33 % x 1,2 = 39,6 %, und mit diesem Tastverhältnis wird der Motor 20 bei Temperaturen zwischen -10° C und -20° C gestartet.

Falls in S270 die Antwort Nein lautet, wird in S274 gesetzt

pwm := $pwm_0$,

d.h. der Motor wird dort mit dem Tastverhältnis pwmo gestartet, das beim Beispiel 33 % beträgt und durch Versuche festgelegt wird.

Naturgemäß müssen auch die Multiplikatoren 1,2; 1,4; 1,6; 1,8 und 2,0 durch Versuche am betreffenden Motor ermittelt werden und stellen allenfalls grobe Richtwerte dar, die nur aus didaktischen Gründen angegeben werden.

Falls der Motor 20 mit dem verdoppelten Tastverhältnis gemäß Schritt S254 nicht startet, kann der Faktor 2,0 ggf. durch zusätzliche Programmschritte weiter erhöht werden, bis der Motor läuft. Dabei fließt der erhöhte Startstrom in Fig. 6 nur während der kurzen Zeitspanne T1, so dass durch einen kurzzeitigen hohen Strom der (kalte) Motor 20 nicht beschädigt werden kann. Während des anschließenden regulären Starts wird der Strom im Motor 20 z.B. durch den Drehzahlregler 90 gesteuert, wobei das Fett in den Kugellagern duch die Drehung des Rotors 28 erwärmt wird und sich bald normale Verhältnisse einstellen.

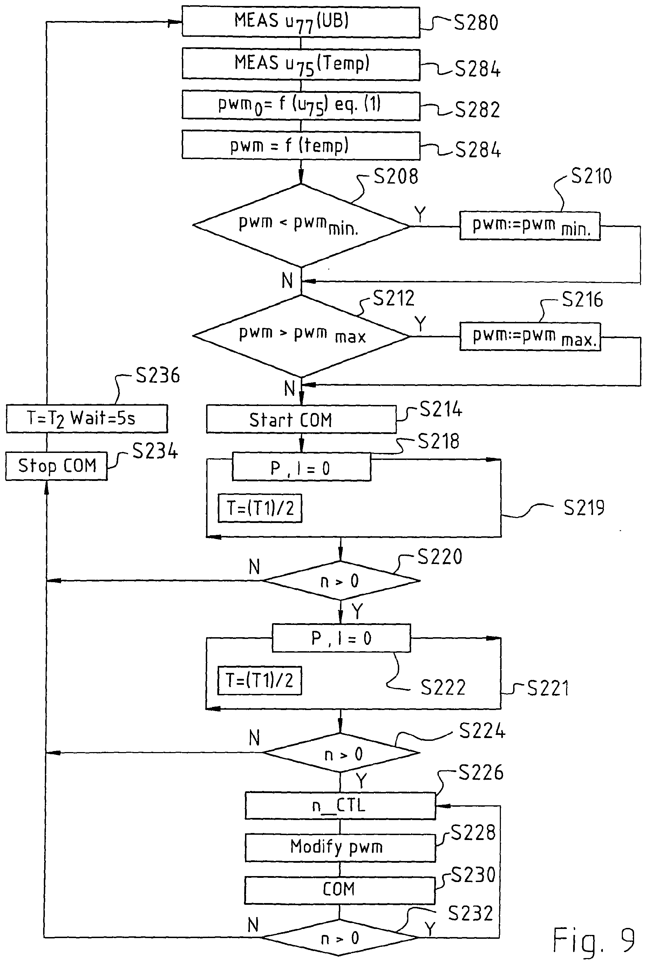

**Fig. 9** zeigt ein Flussdiagramm, bei dem zwei variable Parameter berücksichtigt werden, nämlich einmal die variable Betriebsspannung $U_B$ (wie bei Fig. 4), und zum anderen die variable Temperatur des Motors 20 (wie bei Fig. 7).

Die Struktur des Flussdiagramms ist sehr ähnlich wie bei Fig. 4 und Fig. 7, weshalb auch hier nur die abweichenden Teile beschrieben werden. Für gleiche oder gleich wirkende Bestandteile wird im Interesse der Kürze auf die Beschreibung zu den Fig. 4 und 7 verwiesen.

Bei Fig. 9 wird in S280 die Betriebsspannung $U_B$ erfasst. Dies geschieht in Fig. 1 durch Messung der Spannung $u_{77}$ am Widerstand 77. Diese Spannung wird digitalisiert und im Schritt S282 mit der Formel gemäß Gleichung (1) in ein spannungsabhängiges Tastverhältnis umgerechnet, das hier mit pwmo bezeichnet wird und z.B. zwischen 20 und 40 % liegen kann, vgl. Fig. 2.

Ferner wird im Schritt S284 die temperaturabhängige Spannung $u_{75}$ gemessen und mit dem AD-Wandler 85 in einen digitalen Wert umgewandelt.

Das ermittelte spannungsabhängige $pwm_0$ wird mittels der Routine gemäß Fig. 8 ggf. modifiziert, d.h. wenn z.B. bei einem $U_B$ = 75 V für den Temperaturbereich -10° C bis +100° C ein $pwm_0$ von 23 % ermittelt wird, wie in Fig. 2 als Beispiel dargestellt, so wird im Schritt S284, welcher der Routine gemäß Fig. 8 entspricht, bei Temperaturen unterhalb von -50° C dieses Tastverhältnis (23 %) verdoppelt auf 46 %, um im Zeitbereich T1 der Fig. 6 einen genügend hohen Startstrom 128 zu erhalten.

Auf diese Weise können in einfacher Weise zwei oder mehr variable Parameter für die optimale Festsetzung des Tastverhältnisses pwm im Zeitbereich T1 der Fig. 6 ermittelt werden.

Bei diesen Temperaturen kann der Zeitbereich T1 auch automatisch durch entsprechende, nicht dargestellte Programmteile verlängert werden, um einen besonders sicheren Start des Motors 20 zu ermöglichen.

So erhält man einen Weitspannungs-Weittemperatur-Motor, der sich automatisch an eine Mehrzahl von variablen Betriebsparametern anpassen kann und deshalb besonders vielseitig verwendbar ist.


**Patentansprüche**

1. Elektronisch kommutierter Elektromotor, welcher aufweist:

Einen Rotor (28);
einen Stator, welch letzterem eine Statorwicklungsanordnung (26) zugeordnet ist, der im Betrieb aus einer externen Energiequelle (47) elektrischer Strom (i1) für den Antrieb des Motors (20) zuführbar ist;
einen digitalen Rechner (36), welcher zur Steuerung des regulären Starts des Motors (20) ausgebildet ist;
einen dem digitalen Rechner (36) zugeordneten PWM-Generator (84);
einen Drehzahlregler (90), welcher dazu ausgebildet ist, beim regulären Start des Motors durch Steuerung des Tastverhältnisses die Drehzahl (n) des Motors (20) auf einen gewünschten Wert zu regeln,
wobei der Motor (20) für den Betrieb in einem Parameterbereich ausgelegt ist, welcher variable Parameter (temp, $U_B$) umfasst, die beim Start des Motors (20) unterschiedliche Werte haben können, welche variablen Parameter eine Temperatur (temp) des Motors (20) und eine Betriebsspannung ($U_B$) umfassen, und der digitale Rechner (36) zur Ausführung folgender Schritte ausgebildet ist:

Nach dem Einschalten des Motors (20) und vor dem Beginn des regulären Starts wird während einer ersten Phase (T1) der der Statorwicklungsanordnung (26) aus der externen Energiequelle (47) zugeführte Strom ($i_1$) mit einem von den variablen Parametern (temp, $U_B$) abgeleiteten Tastverhältnis (pwm) aus- und eingeschaltet, um einen Start des Motors (20) zu bewirken;

anschließend an die erste Phase (T1) wird, wenn sich der Rotor (28) dreht, der reguläre Start des Motors (20) eingeleitet.

**2.** Elektromotor nach Anspruch 1, bei welchem dem digitalen Rechner (36) ein A/D-Wandler (85) zugeordnet ist, welcher dazu ausgebildet ist, vor Beginn der ersten Phase (T1) einen Wert (ADmeas) zu ermitteln, welcher die augenblickliche Größe eines der variablen Parameter (temp, $U_B$) kennzeichnet, und ausgehend von diesem Wert (ADmeas) das Tastverhältnis (pwm) für die erste Phase (T1) zu ermitteln.

**3.** Elektromotor nach einem der vorhergehenden Ansprüche, bei welchem der Drehzahlregler (90) als Proportional-Integral-Regler ausgebildet ist.

**4.** Elektromotor nach einem der vorhergehenden Ansprüche, bei welchem der Drehzahlegler (90) so ausgebildet ist, dass er in der Startphase des Motors (20) deaktiviert ist.

**5.** Elektromotor nach einem der vorhergehenden Ansprüche, bei welchem ein minimaler Wert ($pwm_{min}$) für das Tastverhältnis vorgegeben ist, der unabhängig von der Größe der variablen Parameter nicht unterschritten werden kann.

**6.** Elektromotor nach Anspruch 5, bei welchem der minimale Wert ($pwm_{min}$) einstellbar ist.

**7.** Elektromotor nach einem der vorhergehenden Ansprüche, bei welchem ein maximaler Wert ($pwm_{max}$) für das Tastverhältnis vorgegeben ist, der unabhängig von der Größe der variablen Parameter nicht überschreitbar ist.

**8.** Elektromotor nach Anspruch 7, bei welchem der maximale Wert einstellbar ist.

**9.** Elektromotor nach einem der vorhergehenden Ansprüche, bei welchem für die Umsetzung der variablen Parameter in ein Tastverhältnis ein Faktor (m) vorgesehen ist, der bei der Auslegung des Motors (20) selektiert werden kann.

**10.** Elektromotor nach einem der vorhergehenden Ansprüche, bei welchem bei der Berechnung des Tastverhältnisses von einem vorgegebenen maximalen Tastverhältnis ($pwm_{max}$) ein Wert abgezogen wird, der vom Unterschied zwischen diesem maximalen Tastverhältnis ($pwm_{max}$) und der im Augenblick ermittelten Differenz zwischen einem wählbaren Startwert (ADstart) für die Versorgungsspannung und dem tatsächlichen Wert (ADmeas) für die Versorgungsspannung abhängig ist.

**11.** Elektromotor nach den Ansprüchen 9 und 10, bei welchem der abgezogene Wert auch eine Funktion des selektierten Faktors (m) ist.

**Claims**

**1.** Electronically commutated electric motor that comprises:

a rotor (28);
a stator which is assigned a stator winding arrangement (26) to which electrical current ($i1$) from an external energy source (47) can be supplied, during operation, in order to drive the motor (20);
a digital computer (36) that is configured for controlling normal startup of the motor (20);
a PWM generator (84) associated with the digital computer (36);
a speed controller (90) that is configured to regulate the rotational speed (n) of the motor (20), when the motor is started normally, to a desired value, by controlling the pulse duty factor,
wherein the motor (20) is designed to be operated in a parameter range that includes variable parameters (temp,

$U_B$) that can have different values when the motor (20) is started, which variable parameters include a temperature (temp) of the motor (20) and an operating voltage ($U_B$),
and the digital computer (36) is configured to carry out the following steps:

after the motor (20) is switched on and before normal startup begins, during a first phase (T1), the current ($i_1$) supplied to the stator winding arrangement (26) from the external energy source (47) is switched off and on using a pulse duty factor (pwm) derived from the variable parameters (temp, $U_B$), in order to start up the motor (20);
subsequent to the first phase (T1), when the rotor (28) is rotating, normal startup of the motor (20) is initiated.

2. Electric motor according to claim 1, wherein the digital computer (36) is assigned an analog-to-digital converter (85) that is configured to ascertain, before the beginning of the first phase (T1), a value ($AD_{meas}$) that characterises the instantaneous magnitude of one of the variable parameters (temp, $U_B$), and to ascertain, from this value ($AD_{meas}$), the pulse duty factor (pwm) for the first phase (T1).

3. Electric motor according to either of the preceding claims, wherein the speed controller (90) is configured as a proportional-integral controller.

4. The electric motor according to any of the preceding claims, wherein the speed controller (90) is configured so as to be deactivated in the startup phase of the motor (20).

5. Electric motor according to any of the preceding claims, wherein a minimum value ($pwm_{min}$) for the pulse duty factor is predetermined, which value cannot be fallen below, regardless of the magnitude of the variable parameters.

6. Electric motor according to claim 5, wherein the minimum value ($pwm_{min}$) is adjustable.

7. Electric motor according to any of the preceding claims, wherein a maximum value ($pwm_{max}$) for the pulse duty factor is predetermined, which value cannot be exceeded, regardless of the magnitude of the variable parameters.

8. Electric motor according to claim 7, wherein the maximum value is adjustable.

9. Electric motor according to any of the preceding claims, wherein a factor (m), which can be selected when designing the motor (20), is provided for converting the variable parameters into a pulse duty factor.

10. Electric motor according to any of the preceding claims, wherein, when calculating the pulse duty factor, a value that is dependent on the difference between the maximum pulse duty factor ($pwm_{max}$) and the instantaneously ascertained difference between a selectable starting value (ADstart) for the supply voltage and the actual value (ADmeas) for the supply voltage is subtracted from a predetermined maximum pulse duty factor ($pwm_{max}$).

11. Electric motor according to claim 9 and claim 10, wherein the subtracted value is also a function of the selected factor (m).

**Revendications**

1. Moteur électrique à commutation électronique, qui présente :

un rotor (28) ;
un stator, auquel est associé un ensemble d'enroulement statorique (26) auquel, en fonctionnement, du courant électrique (i1) peut être apporté à partir d'une source d'énergie externe (47) afin d'entraîner le moteur (20) ;
un calculateur numérique (36), qui est conçu pour commander le démarrage régulier du moteur (20) ;
un générateur MLI (84) associé au calculateur numérique (36) ;
un régulateur (90) de vitesse de rotation, qui est conçu pour, lors du démarrage régulier du moteur, réguler la vitesse de rotation (n) du moteur (20) à une valeur souhaitée en commandant le taux d'impulsions ;
sachant que le moteur (20) est conçu pour fonctionner dans une plage de paramètres qui comprend des paramètres variables (temp, $U_B$) qui peuvent avoir différentes valeurs lors du démarrage du moteur (20), lesquels paramètres variables comprennent une température (temp) du moteur (20) et une tension de fonctionnement ($U_B$),

et que le calculateur numérique (36) est conçu pour exécuter les étapes suivantes :

à la suite de la mise sous tension du moteur (20) et avant le début du démarrage régulier, pendant une première phase (T1), le courant ($i_1$) apporté à l'ensemble d'enroulement statorique (26) à partir de la source d'énergie externe (47) est mis en et hors circuit avec un taux d'impulsions (pwm) dérivé des paramètres variables (temp, $U_B$), afin de produire un démarrage du moteur (20) ;
à la suite de la première phase (T1), lorsque le rotor (28) tourne, le démarrage régulier du moteur (20) est lancé.

**2.** Moteur électrique selon la revendication 1, dans lequel un convertisseur A/N (85) est associé au calculateur numérique (36), convertisseur qui est conçu pour, avant le début de la première phase (T1), déterminer une valeur ($AD_{meas}$) qui caractérise la valeur instantanée d'un des paramètres variables (temp, $U_B$), et pour déterminer à partir de cette valeur ($AD_{meas}$) le taux d'impulsions (pwm) pour la première phase (T1).

**3.** Moteur électrique selon l'une des revendications précédentes, dans lequel le régulateur (90) de vitesse de rotation est réalisé sous la forme d'un régulateur proportionnel et par intégration.

**4.** Moteur électrique selon l'une des revendications précédentes, dans lequel le régulateur (90) de vitesse de rotation est conçu de telle sorte qu'il est désactivé pendant la phase de démarrage du moteur (20).

**5.** Moteur électrique selon l'une des revendications précédentes, dans lequel une valeur minimale ($pwm_{min}$) est prédéfinie pour le taux d'impulsions, valeur qui ne peut pas être sous-dépassée indépendamment de la valeur des paramètres variables.

**6.** Moteur électrique selon la revendication 5, dans lequel la valeur minimale ($pwm_{min}$) est réglable.

**7.** Moteur électrique selon l'une des revendications précédentes, dans lequel une valeur maximale ($pwm_{max}$) est prédéfinie pour le taux d'impulsions, valeur qui ne peut pas être dépassée indépendamment de la valeur des paramètres variables.

**8.** Moteur électrique selon la revendication 7, dans lequel la valeur maximale est réglable.

**9.** Moteur électrique selon l'une des revendications précédentes, dans lequel, pour la conversion des paramètres variables en un taux d'impulsions, il est prévu un facteur (m) qui peut être sélectionné lors de la conception du moteur (20).

**10.** Moteur électrique selon l'une des revendications précédentes, dans lequel, pour le calcul du taux d'impulsions, on déduit d'un taux d'impulsions maximal prédéfini ($pwm_{max}$) une valeur qui est fonction de la différence entre ce taux d'impulsions maximal ($pwm_{max}$) et la différence instantanément déterminée entre une valeur de démarrage sélectionnable ($AD_{start}$) pour la tension d'alimentation et la valeur effective ($AD_{meas}$) pour la tension d'alimentation.

**11.** Moteur électrique selon les revendications 9 et 10, dans lequel la valeur déduite est également une fonction du facteur sélectionné (m).

Fig. 1

Fig. 2

Fig. 3

Fig. 4

Fig. 5a

**Fig. 5b**

Fig. 5c

Fig.6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024068 A1
- DE 102008008080